# Europäisches Patentamt

## European Patent Office

## Office européen des brevets

(11) Veröffentlichungsnummer: **0 120 343**
**B1**

(12) **EUROPÄISCHE PATENTSCHRIFT**

(45) Veröffentlichungstag der Patentschrift:
27.04.88

(51) Int. Cl.⁴: **B 60 K 15/02**

(21) Anmeldenummer: **84102270.0**

(22) Anmeldetag: **02.03.84**

(54) **Flüssigkeitsbehälter, insbesondere Kraftstoffbehälter für Kraftfahrzeuge.**

(30) Priorität: **29.03.83 DE 3311377**

(43) Veröffentlichungstag der Anmeldung:
**03.10.84 Patentblatt 84/40**

(45) Bekanntmachung des Hinweises auf die Patenterteilung:
**27.04.88 Patentblatt 88/17**

(84) Benannte Vertragsstaaten:
**DE FR GB IT**

(56) Entgegenhaltungen:
**EP-A-0 087 508**
**DE-A-2 440 904**
**DE-A-2 550 950**
**DE-A-2 936 318**
**GB-A-2 043 165**

**PATENTS ABSTRACTS OF JAPAN, Band 8, Nr. 177 (M-317) 1614 , 15. August 1984; & JP - A - 59 70 230 (NISSAN JIDOSHA K.K.) 20.04.1984**

(73) Patentinhaber: **AUDI AG, Postfach 220, D-8070 Ingolstadt (DE)**

(72) Erfinder: **Gödel, Frank- Uwe, Holzmauerweg 2, D-8071 Hepberg (DE)**
Erfinder: **Langhoff, Hans- Jürgen, Heppstrasse 11, D-8070 Ingolstadt (DE)**
Erfinder: **Attenni, Johann, Haydnstrasse 2, D-8071 Pförring (DE)**

(74) Vertreter: **Le Vrang, Klaus, AUDI AG Postfach 220 Patentabteilung I/EQP, D-8070 Ingolstadt (DE)**

## Beschreibung

Die Erfindung betrifft einen Flüssigkeitsbehälter, insbesondere einen Kraftstoffbehälter für Kraftfahrzeuge, gemäß dem Oberbegriff des Patentanspruches 1.

Ein derartiger Flüssigkeitsbehälter ist beispielsweise durch die DE-A 25 50 950 bekannt geworden. Der Staubehälter, aus dem die Pumpe Flüssigkeit bzw. Kraftstoff fördert, ist durch eine Vertiefung im Boden des Behälters und durch einen darüber befestigten Deckel gebildet. In dem Deckel ist eine Ausnehmung vorgesehen, durch die die Pumpe in den Staubehälter einragt. Die Pumpe ist über ein Förderrohr mit einer die Öffnung verschließenden Halterung verbunden, an der auch ein Geberelement für eine elektrische Behälterinhaltsanzeige angeordnet ist.

Die aus Pumpe, Förderrohr, Geberelement und Halterung zusammengesetzte Einschubeinheit kann montagefreundlich durch die Öffnung des Behälters eingeschoben und befestigt werden. Die Herstellung eines im Behälter ausgebildeten Staubehälters ist aber relativ aufwendig, insbesondere wenn der Behälter einteilig, z. B. aus Kunststoff, hergestellt ist.

Aufgabe der Erfindung ist es, den gattungsgemäßen Flüssigkeitsbehälter zu vereinfachen und den Montageaufwand zu verringern, sowie eine nahezu vollständige Entleerung des Behälters sicherzustellen.

Diese Aufgabe wird erfindungsgemäß mit den kennzeichnenden Merkmalen des Patentanspruches 1 gelöst. Durch die Anordnung des Staubehälters an der übrigen Einschubeinheit ergibt sich eine wesentliche Reduzierung des Fertigungsaufwandes des Behälters, weil Befestigungsmittel für den Staubehälter entfallen können. Zusätzlich wird eine einfache, exakte Montage der Pumpe im Staubehälter sichergestellt, weil diese Montage bei guter Zugänglichkeit außerhalb des Behälters erfolgen kann. Ferner können vorhandene, flexible Leitungen zwischen Staubehälter und Halterung funktionssicher angeschlossen werden. Es versteht sich, daß die Öffnung des Behälters so groß ausgeführt sein muß, daß die den Staubehälter umfassende Einschubeinheit in den Behälter montiert werden kann.

Eine in der Herstellung günstige Ausführung von Halterung und Staubehälter ist dem Patentanspruch 2 entnehmbar. Der Staubehälter kann aber auch über eine Gestängeverbindung mit der Halterung verbunden sein.

Mit den Merkmalen des Patentanspruches 3 wird sichergestellt, daß auch bei Verwendung einer Vorförderpumpe die einfache und schnelle Montage erhalten bleibt. Dabei kann zweckmäßig die Vorförderpumpe entsprechend Patentanspruch 4 angeordnet sein, wodurch sich eine räumlich besonders günstige, kompakte Einschubeinheit ergibt.

Durch die Merkmale des Patentanspruches 5 wird eine stetige, toleranz- und setzungsunabhängige Anlage des Sauffußes der Vorförderpumpe am Behälterboden erreicht. Dabei kann entweder nur der Saugfuß die Vorförderpumpe als ganzes oder der gesamte Staubehälter relativ zum Behälterboden verschieblich gehalten sein.

Mit den Merkmalen des Patentanspruches 6 wird zusätzlich sichergestellt, daß der Staubehälter selbst bei einem Ausfall der Vorförderpumpe bis zur nahezu vollständigen Entleerung des Flüssigkeitsbehälters ausreichend mit Flüssigkeit gefüllt ist. Es wird somit eine besonders hohe Funktionssicherheit erzielt.

Gemäß Patentanspruch 7 wird im Staubehälter ein ständiger Überdruck aufrechterhalten, welcher vorteilhaft eine Gasblasenbildung im Staubehälter unterdrückt. Es versteht sich, daß das Überdruckventil an einer geodätisch hoch liegenden Stelle im Staubehälter eingesetzt sein soll, damit auch im Staubehälter ggf. vorhandene Gase oder Luft ausgeschieden werden.

Eine besonders steife Verbindung der Halterung der Einschubeinheit mit dem Flüssigkeitsbehälter ist mit den Merkmalen des Patentanspruches 8 erzielbar. Gemäß Patentanspruch 9 kann an der Einschubeinheit in an sich bekannter Weise ein Flüssigkeitsstandgeber für ein elektrisches Anzeigegerät angebaut sein.

Ein Ausführungsbeispiel der Erfindung ist im folgenden mit weiteren Einzelheiten näher erläutert. Die Zeichnung zeigt in

Fig. 1 einen Abschnitt eines Flüssigkeitsbehälters mit Einschubeinheit in einem senkrechten Schnitt und

Fig. 2 einen Querschnitt entlang der Linie II-II der Fig. 1.

Der abschnittsweise dargestellte Kraftstoffbehälter 2 weist an seiner oberen Wand 4 eine kreissymmetrische Öffnung 6 auf, die von einem Gewindestutzen 8 begrenzt ist. Über die Öffnung 6 ist eine Einschubeinheit 10 in den Kraftstoffbehälter 2 eingesetzt, welche sich im wesentlichen aus einer rohrförmigen Halterung 12, einem daran angeformten Staubehälter 14, einer ersten Pumpe 16 und einer Vorförderpumpe 20 zusammensetzt.

Die Halterung 12 ist mit einem am Gewindestutzen 8 stirnseitig anliegenden Ringflansch 22 versehen, welcher von einer auf den Gewindestutzen 8 aufgeschraubten Überwurfmutter 24 gehalten ist. Zwischen dem Ringflansch 22 und dem Gewindestutzen 8 ist eine ringförmige Dichtung 26 angeordnet. Der Kraftstoffbehälter 2, die Halterung 12 und der Staubehälter 14 sind aus einem kraftstoffresistenten Kunststoff gefertigt.

Der am Boden 28 des Kraftstoffbehälters 2 angeordnete Staubehälter 14 ist zur Halterung 12 hin durch eine feste Trennwand 30 abgeschlossen. In der Trennwand 30 ist eine Öffnung 32 vorgesehen, in der über einen Dichtring 34 abgestützt ein Bauteil 36 der Pumpe 16 geführt ist.

Ferner ist an die Trennwand 30 ein Rücklaufstutzen 38 angeformt, auf welchen eine elastische Kraftstoff-Rücklaufleitung 40 aufgesteckt ist. Durch weitere Öffnungen 42, 44 in der Trennwand 30 sind die an die Pumpe 16 angeschlossene Kraftstoff-Vorlaufleitung 46 und elektrische Leitungen 48, 50 für die Pumpe 16 und die Vorförderpumpe 20 dicht herausgeführt.

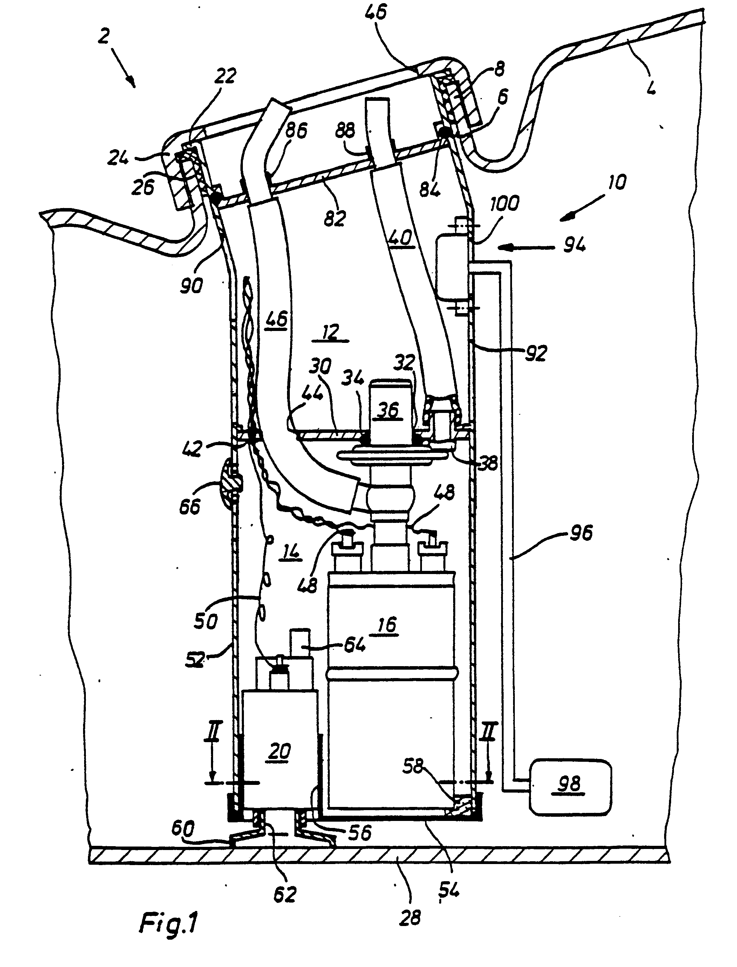

Am unteren Ende des Staubehälters 14 ist an dessen Umfangswand 52 ein Deckel 54 aufgeklipst, der die Pumpen 16, 20 trägt. Dabei ist die Vorförderpumpe 20 in einer hülsenförmigen Öffnung 56 des Deckels 54 gehalten, während die Pumpe 16 in drei im Querschnitt L-förmigen Gummilagern 58 (in der Fig. 1 ist nur ein Gummilager 58 ersichtlich) aufgenommen ist.

Der Saugfuß 60 der Vorförderpumpe 20 weist eine Teleskopführung 62 auf und ist relativ zum Behälterboden 28 federnd verschiebbar, so daß eine ständige Anlage des Saugfußes 60 am Behälterboden 28 gewährleistet ist. Die Vorförderpumpe 20 fördert den Kraftstoff vom Behälterboden 28 über eine Druckleitung 64 in den Staubehälter 14. In dessen Umfangswand 52 dicht unterhalb der Trennwand 30 ist ein gummielastisches Überdruckventil 66 eingesetzt, daß bei einem geringen Überdruck im Staubehälter 14 öffnet und überschüssig geförderten Kraftstoff oder Gasblasen in den Kraftstoffbehälter 2 austreten läßt.

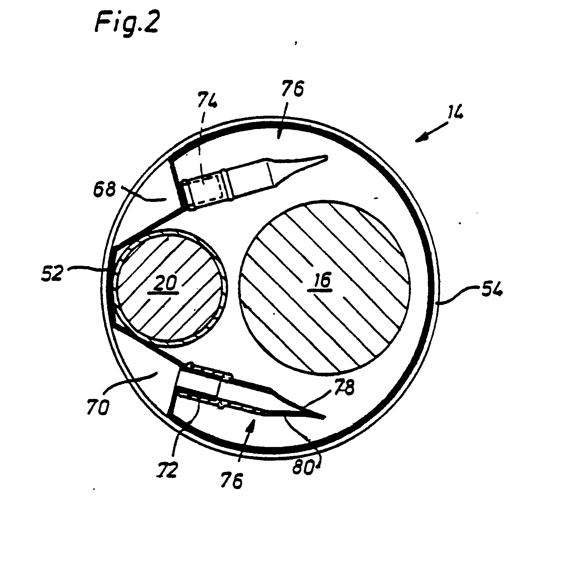

In der Umfangswand 52 des Staubehälters 14 sind benachbart zum Deckel 54 zwei Nischen 68, 70 (s. Fig. 2) mit zwei zum Kraftstoffbehälter 2 offenen Rohrstutzen 72, 74 angeformt, auf welche gummielastische Rückschlagventile 76 aufgesteckt sind. Die Rückschlagventile 76 sind durch fischschwanzartig ausmündende Dichtlippen 78, 80 gebildet, welche bereits bei einer geringen negativen Druckdifferenz zwischen dem Kraftstoffbehälter 2 und dem Staubehälter 14 Kraftstoff in den Staubehälter 14 einströmen lassen. Ein Rückströmen von Kraftstoff bei Druckgleichheit oder bei positiver Druckdifferenz ist nicht möglich.

Am oberen Ende der Halterung 12 in Nähe des Ringflansches 22 ist eine Anschlußplatte 82 über einen elastischen Dicht- und Haltering 84 eingerastet, die die Halterung 12 dicht abschließt. In die Anschlußplatte 82 sind Rohrstutzen 86, 88 zum beiderseitigen Anschluß der Vor- und Rücklauf-Kraftstoffleitungen eingegossen. Desweiteren trägt sie nicht dargestellte Anschlußfahnen für den elektrischen Anschluß der Pumpen 16, 20 an das elektrische Bordnetz des Kraftfahrzeuges. In der Umfangswand der Halterung 12 sind relativ große Ausnehmungen 90, 92 vorgesehen, die als Montage-Öffnungen für die elastischen Kraftstoffleitungen 40, 46 dienen und zugleich verhindern, daß ein das Aufnahmevolumen des Kraftstoffbehälters 2 verringernder Todraum entsteht.

Schließlich ist an der Umfangswand der Halterung 12 ein Flüssigkeitsstandsgeber 94 für ein nicht dargestelltes, elektrisches Anzeigegerät angebaut. Der Flüssigkeitsstandsgeber 94 weist einen schwenkbar gelagerten Hebel 96 mit einem daran befestigten Schwimmer 98 auf und greift in nicht dargestellter Weise ein Potentiometer ab, wobei die ermittelten Widerstandswerte ein Maß für den momentanen Kraftstoffstand im Behälter 2 sind. Der Flüssigkeitsstandsgeber 94 kann von außerhalb der Halterung 12 in eine entsprechende, asymmetrische Öffnungen 100 eingesetzt, verdreht und durch Schrauben oder Klipse befestigt werden.

Nach Montage der vorstehend beschriebenen Einschubeinheit 10 wird diese in den Behälter 2 durch die Öffnung 6 eingeführt und mittels der Überwurfmutter 24 befestigt. So dann kann der Anschluß der nicht dargestellten Kraftstoffleitungen (Vor- und Rücklauf) zum Kraftstoff-Zumeßsystem der Brennkraftmaschine und der elektrischen Leitungen erfolgen. Bei Inbetriebnahme fördert die Vorförderpumpe 20 den Kraftstoff aus dem Behälter 2 in den Staubehälter 14, wobei bei Vorliegen einer bestimmten positiven Druckdifferenz das Überdruckventil 66 öffnet. Es versteht sich, daß der Überdruck im Staubehälter 14 nicht so hoch sein darf, daß der ebenfalls in den Staubehälter 14 mündende Kraftstoffrücklauf (über Anschlußstutzen 32) aus dem Kraftstoff-Zumeßsystem der Brennkraftmaschine unzulässig behindert ist.

Die Pumpe 16 wiederum saugt den im Staubehälter 14 befindlichen Kraftstoff an ihrer Unterseite beim Deckel 54 ab und fördert ihn in die Kraftstoffvorlaufleitung 46. Bei einem Ausfall der Vorförderpumpe 20 kann auch über die Rückschlagventile 76 Kraftstoff in den Staubehälter strömen.

**Patentansprüche**

1. Flüssigkeitsbehälter insbesondere Kraftstoffbehälter (2) für Kraftfahrzeuge, mit einer Öffnung (6), über die eine in einem separaten Flüssigkeits-Staubehälter (14) angeordnete Pumpe (16, 20) einsetzbar ist und die Pumpe mit einer die Öffnung (6) verschließenden Halterung zu einer Einschubeinheit verbunden ist, dadurch gekennzeichnet, daß der Staubehälter (14) an der Einschubeinheit (10) angeordnet ist.

2. Flüssigkeitsbehälter nach Anspruch 1, dadurch gekennzeichnet, daß der Staubehälter (14) mittel- oder unmittelbar an die Halterung (12) angeformt ist.

3. Flüssigkeitsbehälter nach den Ansprüchen 1 und 2, dadurch gekennzeichnet, daß eine weitere Pumpe (Vorförderpumpe 20) vorgesehen ist, welche ebenfalls an der Einschubeinheit (10) befestigt ist und in den Staubehälter (14) fördert.

4. Flüssigkeitsbehälter nach den Ansprüchen 1 bis 3, dadurch gekennzeichnet, daß die Vorförderpumpe (20) ebenfalls innerhalb des Staubehälters (14) aufgenommen ist.

5. Flüssigkeitsbehälter nach den Ansprüchen 3 und 4, dadurch gekennzeichnet, daß deren Saugfuß federnd nachgiebig am Behälterboden aufsitzt.

6. Flüssigkeitsbehälter nach den Ansprüchen 1 bis 5, dadurch gekennzeichnet, daß der Staubehälter (14) am Behälterboden (28) angeordnet ist und mit Rückschlagventilen (66) versehene Öffnungen (Rohrstutzen 62, 64) aufweist, welche ein Übertreten von Flüssigkeit nur vom Behälter (2) in den Staubehälter (14) zulassen

7. Flüssigkeitsbehälter nach den Ansprüchen 1 bis 6, dadurch gekennzeichnet, daß in einer Wand des Staubehälters ein Überdruckventil eingesetzt ist, welches bei einem durch die Vorförderpumpe erzeugten Drucks Flüssigkeit in den Flüssigkeitsbehälter zurückströmen läßt.

8. Flüssigkeitsbehälter nach den Ansprüchen 1 und 2, dadurch gekennzeichnet, daß die Öffnung des Flüssigkeitsbehälters (2) durch einen Gewindestutzen (8) begrenzt ist, daß die Halterung (12) mit einem den Gewindestutzen (8) stirnseitig übergreifenden Ringflansch (22) versehen und mittels einer den Ringflansch (22) festklemmenden Übermurfmutter (24) gehalten ist.

9. Flüssigkeitsbehälter nach den vorhergehenden Ansprüchen, dadurch gekennzeichnet, daß an der Einschubenheit (10) ein Flüssigkeitsstandgeber (72) für ein elektrisches Anzeigegerät angebaut ist.

## Claims

1. Tank for fluids, especially a fuel tank (2) for motor vehicles, having an opening (6) via which a pump (16, 20) arranged in a separate fluid reservoir (14) can be introduced and the pump is connected to a mounting (12) sealing the opening (6) to give a push in unit, characterised in that the reservoir (14) is arranged on the push in unit (10).

2. Tank according to Claim 1, characterised in that the reservoir (14) is moulded indirectly or directly onto the mounting (12).

3. Tank according to Claims 1 and 2, characterised in that a further pump (predelivery pump 20) is provided wich is likewise fixed on the push-in unit (10) and delivers into the reservoir (14).

4. Tank according tc Claims 1 to 3, characterised in that the predelivery pump (20) is likewise accommodated inside the reservoir (14).

5. Tank according to Claims 3 and 4, characterised in that the suction foot thereof rests resiliently on the floor of the tank.

6. Tank according to Claims 1 to 5, characterised in that the reservoir (14) is arranged on the tank floor (28) and exhibits openings (pipe connections 62, 64) equipped with non return valves (66), said openings permitting fluid to pass only from the tank (2) into the reservoir (14).

7. Tank according to Claims 1 to 6, characterised in that in one wall of the reservoir is set a pressure relief valve which allows fluid to flow back into the tank if pressure is generated by the predelivery pump.

8. Tank acording to Claims 1 and 2, characterised in that the opening in the tank (2) is delimited by a screw neck (8), that the mounting (12) is equipped with an annular flange (22) which overlaps the end surface of the screw neck (8) and is held by means of a screw cap (24) wich clamps the annular flange (22).

9. Tank according to the preceding claims, characterised in that on the push in unit (10) is mounted a fluid level detector (72) for an electrical indicating device.

## Revendications

1. Réservoir à liquide, en particulier réservoir à carburant (2) pour véhicules automobiles, comportant une ouverture (6) par laquelle peut être insérée une pompe (16, 20) disposée dans un réservoir de retenue de liquide séparé (14), la pompe et une monture (12) qui ferme l'ouverture (6) étant assemblées en une unité insérable, caractérisé en ce que le réservoir de retenue (14) est monté sur l'unité insérable (10).

2. Réservoir à liquide selon la revendication 1, caractérisé en ce que le réservoir de retenue (14) est formé, indirectement ou directement, d'un seul tenant avec la monture (12).

3. Réservoir à liquide selon la revendication 1 ou 2, caractérisé en ce qu'il est prévu une pompe supplémetaire (pompe de pré-refoulement 20) qui est également fixée à i' unité insérable (10) et qui refoule dans le réservoir de retenue (14).

4. Réservoir a liquide selon l'une quelconque des revendications 1 à 3, caractérisé en ce que la pompe de pré- refoulement (20) est également logée à l'intérieur du réservoir de retenue (14).

5. Réservoir à liquide selon la revendication 3 ou 4, caractérisé en ce que sa crépine d'aspiration (60) repose de façon élastiquement flexible sur le fond (28) du réservoir (2).

6. Réservoir à liquide selon l'une quelconque des revendications 1 à 5, caractérisé en ce que le réservoir de retenue (14) est disposé sur le fond (28) du réservoir et présente des ouvertures (tubulures 62, 64) munies de clapets antiretour (66) qui ne peremttent un passage de liquide que du réservoir (2) vers le réservoir de retenue (14).

7. Réservoir à liquide selon l'une quelconque des revendications 1 à 6, caractérisé en ce qu'il est inséré, dans une paroi du réservoir de retenue (14), une soupape de surpression (66) qui laisse refluer du liquide dans le réservoir à liquide (2) en cas de surpression produite par la pompe de pré-refoulemnt (20).

8. Réservoir à liquide selon la revendication 1 ou 2, caractérisé en ce que l'ouverture (6) du réservoir à liquide (2) est limitée par une tubulure filetée (8), et en ce que la monture (12) est munie d'un rebord annulaire (22) qui recouvre frontalement la tubulure filetée (8) et est maintenue au moyen d'un écrou d'accouplement (24) qui bloque le rebord annulaire (22).

9. - Réservoir à liquide selon l'une quelconque des revendications 1 à 8, caractérisé en ce qu' un détecteur de niveau de liquide (94) pour un instrument indicateur électrique est monté sur l'unité insérable (10).

Fig.1

Fig.2